# EUROPEAN PATENT SPECIFICATION

(11) **EP 1 334 385 B1**
(45) Date of publication and mention of the grant of the patent: **06.08.2008**
(21) Application number: 01988874.2
(22) Date of filing: 26.10.2001
(51) Int. Cl.: G02B 6/12

(54) **HYBRID BURIED/RIDGE PLANAR WAVEGUIDES**
HYBRIDE PLANARE VERGRABENE / STEG-WELLENLEITER
GUIDES D'ONDES PLANAIRES HYBRIDES ENTERREES/A MOULURES

(30) Priority: 27.10.2000 EP 00309508; 02.11.2000 US 244926 P
(43) Date of publication of application: 13.08.2003
(73) Proprietor: Pirelli & C. S.p.A., 20123 Milano (IT)
(72) Inventor: CARNIEL, Federico, I-20127 Milano (IT); COSTA, Raffaella, I-20129 Milano (IT); MELLONI, Andrea, I-20133 Milano (IT)
(74) Representative: Haines, Miles John L.S.
(86) International application number: PCT/IB2001/002725
(87) International publication number: WO 2002/035267

(56) References cited:
- US-A- 4 999 686
- US-A- 5 659 646
- US-A- 5 706 374
- PATENT ABSTRACTS OF JAPAN vol. 011, no. 093 (P-559), 24 March 1987 (1987-03-24) & JP 61 246704 A (OMRON TATEISI ELECTRONICS CO), 4 November 1986 (1986-11-04)
- BOSC D ET AL: "Hybrid silica-polymer structure for integrated optical waveguides with new potentialities" MATERIALS SCIENCE AND ENGINEERING B,CH,ELSEVIER SEQUOIA, LAUSANNE, vol. 57, no. 2, 1999, pages 155-160, XP004152925 ISSN: 0921-5107
- K.-H. TIETGEN: "Probleme der Topographie optischer Schaltungen" FREQUENZ, vol. 35, no. 9, 1981, pages 247-252, XP002164038
- PATENT ABSTRACTS OF JAPAN vol. 015, no. 469 (P-1281), 27 November 1991 (1991-11-27) & JP 03 200904 A (NEC CORP), 2 September 1991 (1991-09-02)
- GUANGWEN ZHANG ET AL: "GLASS INTEGRATED OPTICS CIRCUIT FOR 1.48/1.55- AND 1.30/1.55- MUM-WAVELENGTH DIVISION MULTIPLEXING AND 1/8 SPLITTING" APPLIED OPTICS,US,OPTICAL SOCIETY OF AMERICA,WASHINGTON, vol. 33, no. 16, 1 June 1994 (1994-06-01), pages 3371-3374, XP000450228 ISSN: 0003-6935
- PATENT ABSTRACTS OF JAPAN vol. 011, no. 308 (P-624), 8 October 1987 (1987-10-08) & JP 62 100706 A (NIPPON TELEGR & TELEPH CORP), 11 May 1987 (1987-05-11)
- RAFIZADEH D ET AL: "WAVEGUIDE-COUPLED ALGAAS/GAAS MICROCAVITY RING AND DISK RESONATORS WITH HIGH FINESSE AND 21.6-NM FREE SPECTRAL RANGE" OPTICS LETTERS,US,OPTICAL SOCIETY OF AMERICA, WASHINGTON, vol. 22, no. 16, 15 August 1997 (1997-08-15), pages 1244-1246, XP000699481 ISSN: 0146-9592 cited in the application
- LITTLE B E ET AL: "VERTICALLY COUPLED GLASS MICRORING RESONATOR CHANNEL DROPPING FILTERS" IEEE PHOTONICS TECHNOLOGY LETTERS,US,IEEE INC. NEW YORK, vol. 11, no. 2, February 1999 (1999-02), pages 215-217, XP000803429 ISSN: 1041-1135 cited in the application
- A.W. SNYDER AND J.D. LOVE: "Optical waveguide theory" 1983 , CHAPMAN & HALL MEDICAL , LONDON XP002164039 page 706 -page 708
- ADAR R: "MEASUREMENT OF VERY LOW-LOSS SILICA ON SILICON WAVEGUIDES WITH A RING RESONATOR" APPLIED PHYSICS LETTERS,US,AMERICAN INSTITUTE OF PHYSICS. NEW YORK, vol. 58, no. 5, 4 February 1991 (1991-02-04), pages 444-445, XP000206241 ISSN: 0003-6951 cited in the application
- SENICHI SUZUKI ET AL: "INTEGRATED-OPTIC RING RESONATORS WITH TWO STACKED LAYERS OF SILICA WAVEGUIDE ON SI" IEEE PHOTONICS TECHNOLOGY LETTERS,US,IEEE INC. NEW YORK, vol. 4, no. 11, 1 November 1992 (1992-11-01), pages 1256-1258, XP000328573 ISSN: 1041-1135 cited in the application
- OFFREIN B J ET AL: "TUNABLE OPTICAL ADD/DROP COMPONENTS IN SILICON-OXYNITRIDE WAVEGUIDESTRUCTURES" PROCEEDINGS OF THE EUROPEAN CONFERENCE ON OPTICAL COMMUNICATION, 1998, XP000972283 cited in the application
- OFFREIN B J ET AL: "WAVELENGTH TUNABLE OPTICAL ADD-AFTER-DROP FILTER WITH FLAT PASSBANDFOR WDM NETWORKS" IEEE PHOTONICS TECHNOLOGY LETTERS,US,IEEE INC. NEW YORK, vol. 11, no. 2, February 1999 (1999-02), pages 239-241, XP000803437 ISSN: 1041-1135 cited in the application
- SPUEHLER M M ET AL: "A VERY SHORT PLANAR SILICA SPOT-SIZE CONVERTER USING A NONPERIODIC SEGMENTED WAVEGUIDE" JOURNAL OF LIGHTWAVE TECHNOLOGY,US,IEEE. NEW YORK, vol. 16, no. 9, 1 September 1998 (1998-09-01), pages 1680-1685, XP000786642 ISSN: 0733-8724 cited in the application

## Description

### BACKGROUND OF THE INVENTION

The invention relates to optical waveguide devices and to methods of fabricating optical waveguide devices.

In the realisation of passive integrated optical devices there is often a preferred waveguide structure for each of the building blocks of the device. For example, it is easier to fabricate a high quality directional coupler in a low refractive index contrast waveguide. Refractive index contrast, or index contrast for short, refers to the size of the refractive index difference between the core material and cladding material of the waveguide. A low index contrast is also preferable for fabricating many other optical component building blocks. By contrast, a bent or curved waveguide will tend to require a high refractive index contrast waveguide. Generally, the smaller the bend radius, the larger the refractive index contrast that will be required to keep bend losses to an acceptable level.

Some optical devices include a mixture of components, some of which that are best made with low index contrast waveguides and others of which that are best made with high index contrast waveguides. If such a device is to be made integrated on a single chip or substrate, there is then the problem of how to satisfy the conflicting requirements of the different components of the device.

One example of a device with such conflicting requirements is a ring resonator. Ring resonators are described in references [1],[2],[3] and [4]. These known ring resonators comprise a ring waveguide in combination with one or two straight waveguides that are arranged tangentially to the ring waveguide in order to couple to a circumferential portion of the ring waveguide. In this case, the coupling region is increasingly difficult to fabricate as the index contrast increases, whereas without sufficient index contrast bending losses in the ring will be too high.

Prior art micro-ring resonator designs are now reviewed in more detail. Large radius ring resonators, with radius values of the order of millimetres, have been realisable for some time. Large radius ring resonators are useful for the characterisation of the propagation losses of low index contrast waveguides and for the extraction of a specific emission line from a laser. These devices have been realised in planar lightwave circuit (PLC) technology, with low propagation loss and good fibre coupling. However, because of the low refractive index contrast of such devices, the minimum bend radius achievable is quite large, being several millimetres, and the free spectral range (FSR) is consequently quite small, for example only a few GHz using conventional glass on silicon technology with an index contrast of 0.7% (e.g. 8 - 12.5 GHz in reference [10]).

To be able to use a ring resonator device as a filter in a wavelength division multiplexed (WDM) system for signal processing, a much larger FSR would be needed, which in turn would require a much smaller bend radius of the ring resonator. A bend radius of a few hundreds of micrometers or less is necessary.

Small radius micro-cavity ring and disk resonators with a radius of 5 micrometers have been demonstrated with deep etched GaAs/AlGaAs waveguides [2]. However, such waveguides are less than half a micrometer wide and present very high propagation and fibre-coupling losses. They also require an excellent nanofabrication process, based on electron-beam lithography and inductive-coupled plasma ion etching in order to achieve the necessary very-deep, ultra-smooth and vertical sidewalls with gaps as small as 150 nm and as deep as 2.5 µm. The realisation of a good quality directional coupler is a critical issue in high index contrast waveguides, such as these deep etched GaAs/AlGaAs waveguides.

Micro-ring glass resonators have also been demonstrated in the form of an air-clad glass micro-ring vertically coupled to buried channel waveguides [3]. An integrated optic ring resonator has also been fabricated with two stacked layers of silica waveguides on silicon [4]. In both references [3] and [4], buried waveguide channels serve as input/output waveguides, allowing both low fibre-coupling losses and a controlled mode-coupling in the directional-coupler region. However, these methods require two steps of both deposition and etch of the waveguide core, and the alignment of the second waveguide core to the first one is very critical.

Apart from ring resonators, there are many other devices that need low index contrast, but would benefit from the possibility of having low-loss, tightly bending waveguide sections. As an example, it is well known that for filter design, the higher the order, the better shaped is the transfer function [5]. But the higher the order of the filter the longer the device. However, there is always a limited wafer size in an integrated optic process, which may limit the number of stages of the filter. As a concrete example, a 1-from-4 add/drop filter realised by a cascade of Mach-Zehnder interferometers with 5/6 stages (and SiON technology) requires a chip with dimensions of 75 X 5.6 mm [6]. This clearly requires a large wafer size. The design constraint of wafer size could be removed if the (linear) device could be divided into sub-sections, each sub-section being connected by a low-loss bent waveguide. But this is not generally possible, since a device component such as a Mach-Zehnder interferometer needs a low index contrast fabrication for good quality, which in turn precludes being able to provide low-loss bent waveguides with a small enough bend radius.

Still more generally, for any integration process, it is desirable to pack as many devices onto a single chip. In this respect, integration of planar optical devices is no different from other forms of integration [7]. For waveguide devices, high packing densities will be difficult to achieve without low-loss tight waveguide bends.

It would therefore be highly desirable in the fabrication of ring resonators, optical add/drop multiplexers and a variety of other optical devices, if high and low refractive index contrast waveguide sections could be conveniently combined on a single chip. The high refractive index contrast waveguide sections could then be used for low-loss tight bends, whereas the other device components could be realised in low refractive index contrast waveguide sections to optimise their quality.

K.H. Tietgen, "Probleme der Topographie optischer Schaltungen", Frequenz, volume 35, number 9, pages 247-252, 1981 discloses a waveguide manufactured to have a reduced bend loss. The reduction in the bend loss is achieved by etching a pit at the outer side of each waveguide bend. Rib waveguides are also disclosed as having a superior bend loss relative to buried waveguides.

US 4,999,686 discloses the use of rib waveguides to improve the confinement of a waveguide mode in order to reduce bend losses.

JP 62 100706 in patent abstracts of Japan, volume 11, number 308, discloses a ring coupler manufactured from four separate waveguides.

### SUMMARY OF THE INVENTION

According to a first aspect of the invention an optical device according to claim 1 is provided. According to a second aspect of the invention, a method of fabricating a waveguide structure according to claim 6 is provided.

It is thus possible to realise a waveguide structure comprising a combination of buried waveguide sections and ridge waveguide sections on the same substrate, sharing a common core layer. The buried waveguide sections thus provide the low index contrast desirable for couplers and other device components, whereas the ridge waveguide sections provide the high index contrast needed for efficient low-loss curved waveguides. The hybrid structure is fabricated starting from a low index contrast buried planar waveguide. Cladding material on both sides of the waveguide core is then removed, e.g. by etching, to enhance the index contrast in that section of the waveguide. The other sections of the waveguide core remain buried and thus retain low index contrast.

Using this approach a variety of optical devices, such as add/drop multiplexers for WDM applications, can be made with large feature sizes of several microns using silica-on-glass or silica-on-silicon technology, for example. Specifically, there is no need to resort to nanofabrication technology using difficult or costly techniques such as electron beam lithography or inductive-coupled plasma ion etching,

The invention thus enables fabrication on a single chip of an optical device having a mixture of high and low index contrast waveguide sections, thus allowing independent optimisation of parts of the device which had irreconcilable design requirements in prior art fabrication methods,

Further, the invention allows low-loss bends, such as L-bends or U-bends to be made wherever desired on a chip by removing material to form an exposed ridge section, thereby allowing better use of the space available on a chip. Higher device packing densities are thus easily achievable in integrated waveguide devices. In one example described further below, ridge section U-bends are used to form a multiple cascade of Mach-Zehnder interferometers made out of buried waveguide sections.

A transition section is advantageously arranged between a buried and ridge waveguide section to provide very low transition losses. The transition section can be formed by tapering, preferably adiabatically, the lateral dimensions of the cladding layer beside the core of the waveguide so that the lateral cladding thickness increases from a low (possibly zero) value in the ridge section to a high (typically effectively infinite) value in the buried waveguide section. In this context, 'effectively' infinite is meant to describe that the lateral cladding thickness is sufficiently large that substantially no field of the fundamental waveguide mode extends beyond the lateral cladding. With this tapered transition section, coupling of the respective propagation modes in the buried and ridged waveguide sections is effected by mode adaptation in the transition section.

In embodiments of the invention, the waveguide is single mode, preferably both in the buried and ridge sections, although multimode behaviour may be of interest in some applications.

It is believed that this kind of transition based on modulation of the cladding thickness beside the core has not previously been contemplated. By contrast, prior art designs of such transitions rely instead on modulation of the thickness of the waveguide core itself, as described in references [8] and [9].

The invention may be embodied in waveguide structures operable over a wide range of wavelengths and using a wide range of waveguide fabrication technologies. Specifically, waveguide structures operable in the first, second or third telecommunications windows can be fabricated, e.g. a wavelength range of between 750 to 1650 nm can be accessed.

The lateral cladding in the ridge section may have a width of between 0.1 and 1 microns.

A transition section may be provided interconnecting the buried and ridge sections, the transition section comprising lateral cladding having a width that increases from the ridge section to the buried section to increase the effective refractive index of the fundamental mode of the waveguide from a lower value in the ridge section to a higher value in the buried section. The cladding width may be varied adiabatically in the transition section, thereby to suppress transition losses.

The waveguide may be single mode both in the buried section and the ridge section.

According to a third aspect of the invention there is provided an optical device comprising first and second cascades of Mach-Zehnder interferometers according to claim 7.

The bend may be U-shaped to provide a half turn, with the first and second cascades being arranged side by side. The ridge waveguide bend may have a radius of between 200 microns and 5 cm, more especially of between 1 mm and 1 cm.

According to a fourth aspect of the invention there is provided an optical device comprising first and second linear waveguides and at least one ring waveguide arranged therebetween according to claim 10.

The further sections may have a bend radius at least five times larger than a bend radius of the coupling sections of the at least one ring waveguide.

### BRIEF DESCRIPTION OF THE DRAWINGS

For a better understanding of the invention and to show how the same may be carried into effect reference is now made by way of example to the accompanying drawings in which:
Figure 1 is a schematic perspective view of a buried waveguide section of an optical device;
Figure 2 is a schematic perspective view of a ridge waveguide section of an optical device;
Figure 3 is a schematic perspective view of a transition waveguide section of an optical device;
Figure 4 is a schematic plan view of the transition waveguide section of Figure 3;
Figure 5 is a graph showing the variation of effective refractive index of the fundamental mode with lateral cladding width in an example;
Figure 6 is a plan view of a hybrid waveguide structure having a ridge waveguide section, as shown in Figure 2, interconnecting two buried waveguide sections, as shown in Figure 1, via respective transition waveguide sections, as shown in Figures 3 and 4;
Figure 7 is a schematic plan view of an add/drop filter according to an embodiment of the invention comprising first and second cascades of Mach-Zehnder interferometers, realised with buried waveguide sections, interconnected by U-bend ridge waveguide sections;
Figure 8 is a section through X-X of Figure 7;
Figure 9 is a schematic plan view of an add-after-drop filter according to an embodiment of the invention comprising first and second cascades of Mach-Zchnder interferometers, realised with buried waveguide sections, interconnected by a U-bend ridge waveguide section;
Figure 10 is a section through X',X' of Figure 9;
Figure 11 is a schematic plan view representative of further embodiments of the invention comprising first and second integrated optical circuits interconnected by U-bend ridge waveguide sections;
Figure 12 is a section through X"-X" of Figure 11;
Figure 13 is a schematic plan view of a ring resonator according to an embodiment of the invention;
Figure 14 is a schematic plan view of a multiple ring resonator according to another embodiment of the invention; and
Figure 15 shows a schematic section of a further type of buried waveguide structures in which the invention may be embodied.

### DETAILED DESCRIPTION

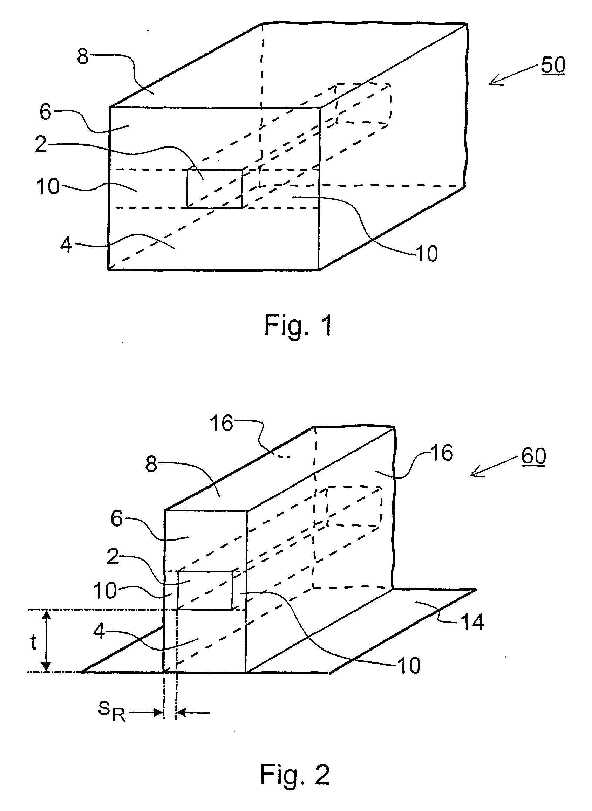

Figure 1 is a schematic perspective of a buried waveguide section 50 which forms component part of an optical device of a first embodiment of the invention. In this embodiment, the example of a glass waveguide realised by silica on silicon fabrication is taken. The silica is doped with Ge to provide the desired level of refractive index contrast. Other dopants could be used in alternative embodiments. The buried waveguide section comprises a generally rectangular section core 2 extending in a plane beneath an upper surface 8 and surrounded by cladding material built up from an upper cladding layer 6, a lower cladding layer 4 and two lateral cladding layers 10 on either side of the core 2. The silica waveguide structure is arranged on a silicon substrate (not shown). In alternative embodiments, other substrates such as glass (doped or undoped) may be used. The main role of the substrate is to provide mechanical support. In this example of silica on silicon, the physical parameters are:
refractive index of the core layer (@ 1550 nm) : 1.4697
refractive index of the cladding layers (@ 1550 nm): 1.4552
core width : 4.5 µm
core thickness : 5 µm
lateral cladding thickness = core thickness : 5 µm
lateral cladding width (S_{B}) 9 µm
upper cladding layer thickness : 6 µm

Figure 2 is a schematic perspective of a ridge waveguide section 60 which forms a second component part of an optical device of the first embodiment. The ridge waveguide section 60 is realised by fabricating or processing of a buried waveguide section as shown in Figure 1. For example, the structure may be formed by the post-processing method of etching down from the upper surface 8 either side of the core 2 to form a ridge containing the core 2. The ridge waveguide section 60 thus has side surfaces 16 extending down from the upper surface 8 beside the core to provide enhanced lateral confinement of waveguide modes in the ridge. The etching is performed in this embodiment so that side surfaces 16 extend down past the core 2 to a lower surface 14 from which the ridge stands proud, with the core elevated above the level of the lower surface 14. More specifically, the etch is through not only the upper cladding layer 6 (6 micron thickness), and beside the core (5 micron thickness), but also extends further down into the lower cladding layer 4 by a further 9 microns (dimension 't' in the drawing). The side surfaces of the ridge thus have a total depth of 20 µm, 6 µm for the upper cladding, 5 µm for the core and 9 µm for the lower cladding (t).

In alternative embodiments the dimension 't' may be varied between zero and about 2 or 3 times the core thickness. Generally, as 't' is increased from zero bending losses will decrease until a saturation is reached when the light field no longer extends sufficiently to interact with the lower surface 14. The choice of 't' will also depend on the level of mode confinement, i.e. the refractive index contrast.

Although not illustrated, in the example structures, silica cladding extends below the lower surface 14, typically by a further 10 and 20 microns before the silicon substrate is reached. As a result, the silicon substrate has substantially no effect on the optical waveguiding of light confined by the core 2.

The ridge is slightly wider than the core so that there is lateral cladding of width S_{R} either between the core 2 and the two side surfaces 16 of the ridge. The lateral cladding width S_{R} is chosen in the range between 0.1 and 1 microns for this structure. Provision of lateral cladding is beneficial since any roughness or width fluctuations in the etched side surfaces do not have such a major effect on the propagation efficiency of modes in the waveguide. If lateral cladding were not provided, i.e. if the etch passed through the sides of the core, care would need to be taken that the etch process provides highly smooth and straight side surfaces.

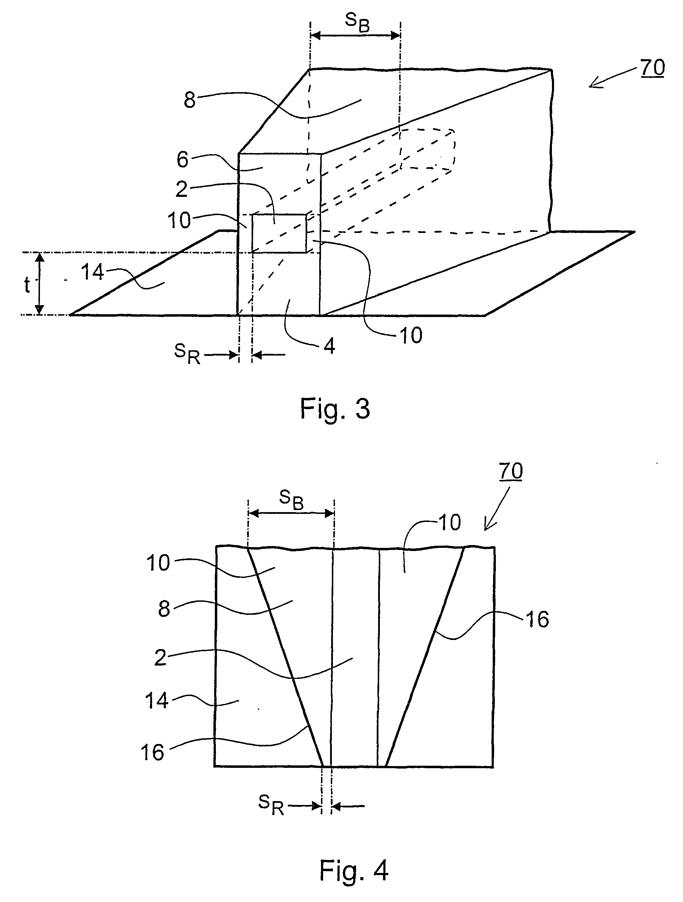

Figures 3 and 4 are respectively schematic perspective and plan views of a transition waveguide section 70 which forms a third component part of an optical device of the first embodiment. The transition waveguide section 70 is used to link buried and ridge waveguide sections 50 and 60. In the transition waveguide section 70, lateral cladding is provided that widens gradually (i.e. tapers out) from the ridge section value S_{R} to the buried waveguide section value S_{B}. A linear taper is shown in the figure. This has the effect of increasing the effective refractive index of the fundamental mode of the waveguide from a lower value in the ridge section to a higher value in the buried section, as will be described in more detail shortly. The taper in the transition waveguide section is preferably adiabatic to suppress transition losses. The length of the taper is chosen according to the losses that can be tolerated. A more rapid taper gives higher losses, but also provides a shorter length of the transition waveguide section. This design trade-off can be made using standard beam propagation method (BPM) simulations. In the present example, the transition waveguide length, i.e. taper length, is chosen to be 100 microns.

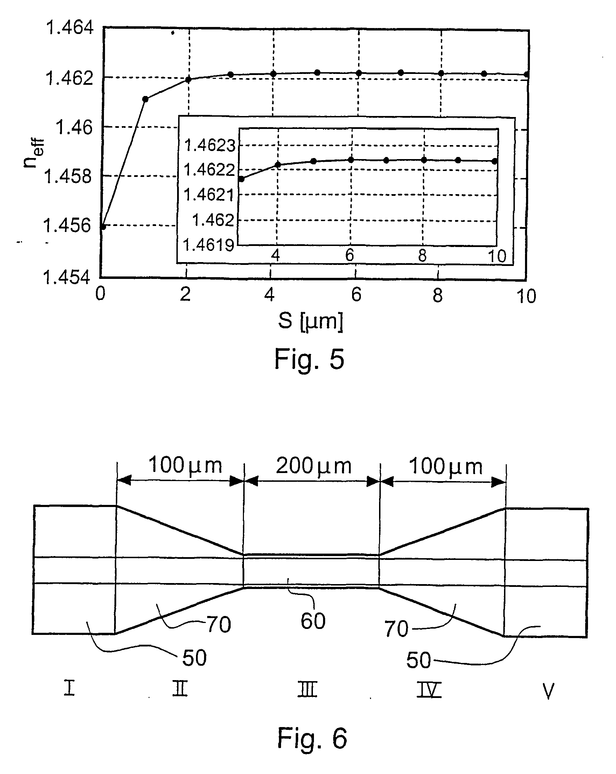

Figure 5 is a graph showing the variation of effective refractive index n_{eff} of the fundamental mode of a silica waveguide, such as those of Figures 1 or 2, as a function of the lateral cladding width s, where S=S_{B} for buried waveguide section and S=S_{R} for ridge waveguide section. It is evident that the effective refractive index saturates above a certain cladding width, which is about 6 microns in this example. Moreover, for a significant effective refractive index reduction from the saturated value, it is evident that the cladding width needs to be reduced to well below the saturation value, in this example below about 1 micron.

In the present embodiment, both the buried and ridge waveguide sections are single mode. As the effective refractive index n_{eff} decreases when the lateral cladding is etched away, the waveguide dimensions are chosen so that the buried waveguide section is single mode, with the first odd mode slightly below the cut-off, and so that the ridge waveguide section has a mode that is sufficiently confined. Moreover, in this embodiment, the core dimensions are the same in both the buried and ridge waveguide sections and, therefore, the effective refractive index n_{eff} of the ridge waveguide section is very low, near the cladding refractive index, as is apparent from Figure 5. This is not a problem because the ridge waveguide section is used for making bends and the n_{eff} increases when the waveguide is curved. Due to the increased refractive index contrast, the field in the curved ridge waveguide section is well confined and the waveguide remains single mode.

In the present embodiment, the cladding width S_{B} for buried waveguide section is chosen to be above about 6 microns, i.e. a width sufficiently large to ensure that the modal field is not significantly influenced by the air or other filling material that lies outside the cladding. In the specific example, a value of S_{B} = 9 µm is chosen. For the ridge waveguide section, the cladding width S_{R} is chosen to be below about 1 micron, i.e. a width small enough to ensure that the modal field has significantly overlap with the air or other low index filling material outside the cladding. As discussed above, by providing lateral cladding the requirements imposed on the etching process are less stringent. Preferably the cladding width S_{R} is at least 0.1 microns with these materials.

Figure 6 is a plan view of a hybrid waveguide structure bringing together each of the components discussed above, Namely, a ridge waveguide section III, as shown in Figure 2, is arranged interconnecting two buried waveguide sections I and V, as shown in Figure 1, via respective transition waveguide sections II and IV, as shown in Figures 3 and 4, A hybrid buried/ridge waveguide structure is thus created having a continuous common core that extends in a plane, in some sections buried and in other sections emerging from the buried sections to run along elevated, ridge sections. As will be appreciated from the above discussion of Figure 5, a mode travelling in the waveguide thus experiences variations in refractive index contrast along its path, with higher refractive index contrast in the exposed ridge sections and lower refractive index contrast in the submerged, buried sections. Couplers and other device features can thus be fabricated in buried sections, whereas, whenever a tight bend is required, the surface can be etched away to form a ridge section of high index contrast.

In the specific example, the variation in refractive index contrast is such that, whereas the minimum bend radius in the buried waveguide sections is 5 mm, it is only a few 100 microns in the ridge waveguide sections (depending on the cladding width S_{R}). A quite remarkable effect is thus achieved with this simple post-processing of a buried planar waveguide. Concrete examples of optical device structures incorporating such a combination of (buried) couplers and (ridge) bends are described further below.

Simulations carried out with the BPM method predict a total loss of only 0.012dB from sections I to V of the structure shown in Figure 6. This very low loss is attributable to modal mismatch between the different sections of the structure.

Having now described the basic components of buried and ridge waveguide sections, as well as the interconnecting transitions, some device examples incorporating these components are now described.

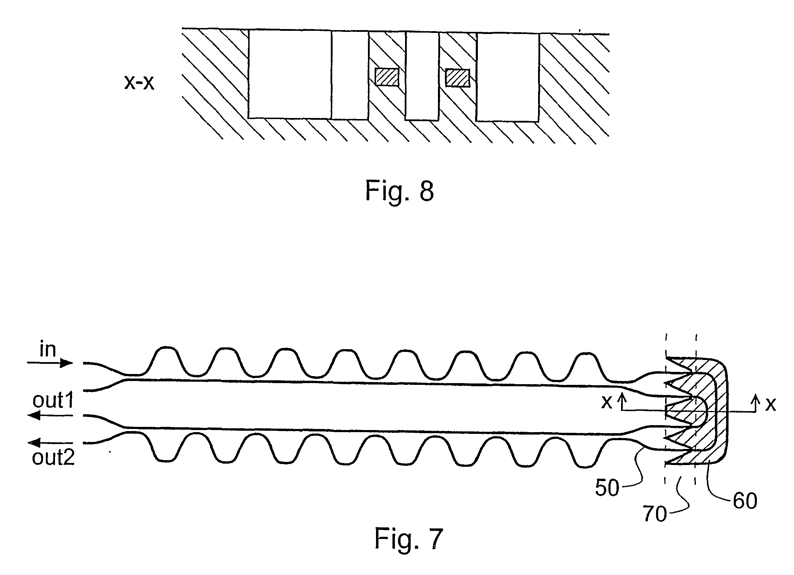

Figure 7 is a schematic plan view of a filter, such as is useful for WDM systems, according to an embodiment of the invention. In the prior art [5], an add/drop filter based on a cascade of Mach-Zehnder (MZ) interferometers is a known device which has a long length and thus requires a large chip. Utilising the hybrid buried/ridge waveguide structure described above, this conventional device can be made shorter, as illustrated. In the figure, the thick black lines indicate waveguide cores. The MZ cascade structure is evident, each half of the device comprising a first, straight waveguide core and a second, undulating waveguide core that repeatedly tangentially couples with the straight waveguide. The top surface of the chip is shown white and the lower surface is shown with hatching. The shortening of the device in the present embodiment is achieved by sub-dividing the MZ cascade into first and second cascades arranged in parallel side-by-side and each being realised with buried waveguide sections 50. The device has in input/output end (left side in the drawing) and a folded end (right side of the drawing) in which the first cascade is joined to the second cascade. At this folded end, the surface layer is etched away to elevate the core in ridge sections 60, as previously described. Appropriate linear transitions sections 70 are formed between the buried and ridge sections. The two adjacent MZ cores of the different MZ cascades are linked by a first U-shaped ridge section and the two remote MZ cores are interconnected by a further U-bend ridge waveguide section. Taking the specific examples of silica waveguides discussed further above, bends with radii of curvature down to about 100 microns can be made without significant bending losses.

Figure 8 is a cross-section through the folded end of the device, as indicated by the section line X-X in Figure 7. As shown, the etching of the top layer has formed a number of trenches leaving the waveguide cores elevated in ridge sections. The etching leaves a track either side of the core, which are shown being slightly laterally offset from the core, but could cut through the core (S_{R}=0). The width of the tracks should be sufficiently large to provide enough space for evanescent field decay of the waveguide modes in the air. In addition, for devices such as shown in Figure 8 where two or more ridges run alongside, the track widths need to be large enough to avoid undesired coupling between modes of adjacent ridge waveguides. With glass on silicon technology, the track widths should preferably be greater than about one micron. For semiconductors, track widths can be reduced to about 0.1 microns. There is of course no upper limit to the track width. If convenient, e.g. at a chip edge, the ridges can be free standing so that there is effectively no track, at least on one side of such a ridge.

Furthermore, it will be understood that the trenches need not necessarily be left open, i.e. filled with air or some other passivating gas, but could be overgrown with a material of lower refractive index than the cladding material. Overgrowth will generally not be performed for silica technology owing to the lack of a suitable material with sufficiently low refractive index to provide a desired level of index contrast. On the other hand, for semiconductor technology the waveguide core and cladding materials have much larger refractive indices so that overgrowth with a variety of materials is possible while retaining a desired level of index contrast.

Folding the MZ cascade in this way into two, or if desired three or more, separate cascades of shorter length is of course advantageous, since a smaller chip can be used. In addition, making the chip shorter helps reduce any problems arising from long-range fluctuations of the material parameters across the chip, e.g. a gradual change in the refractive index across the chip. Although the same effect can be achieved by an optical fibre loop pigtailed to the chip edge, instead of the curved ridge waveguide solution adopted, a fibre loop solution is technically inferior in a number of respects. First, the inherent coupling losses into and out of the fibre would be much higher. Second, the actual coupling losses may be still higher since the alignment for pigtailing is likely to be imperfect. In any case, pigtailing is a relatively onerous procedure in comparison to the etch solution of the present embodiment. Third, optical fibres have a minimum bend radius of about 5 cm, so that a considerable amount of space is taken up beside the chip. The small radii on-chip ridge waveguide sections of the present embodiment offer a far superior technical solution.

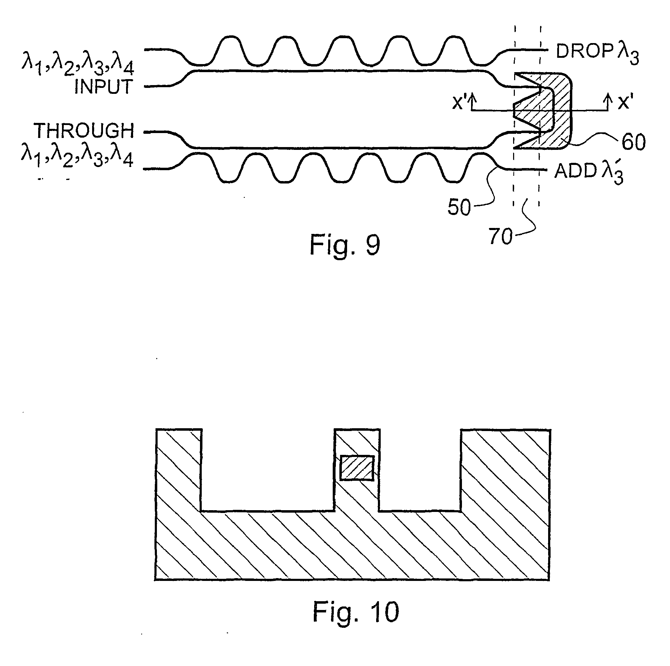

Figure 9 is a schematic plan view of an add-after-drop filter according to another embodiment of the invention, the features of which will be generally understood from the above description of the previous embodiment. In the prior art [5a], an add-after-drop filter based on a cascade of Mach-Zehnder (MZ) interferometers is a known device which has a long length and thus requires a large chip. Utilising the hybrid buried/ridge waveguide structure described above, this conventional device can be made shorter, as illustrated. The only structural difference of this embodiment in comparison to the previous embodiment is that the outside buried channels of the two MZ cascades are not wrapped around by a ridge section, but rather fed to the chip edge as DROP and ADD lines. The buried inner channels 50 of the two MZ cascades are wrapped around by a ridge section 60 as shown in Figure 2, as in the previous embodiment. Appropriate linear transition sections 70, as shown in Figures 3 and 4, connect the buried sections to the ridge sections. The device has four ports (INPUT, DROP, ADD, THROUGH). The upper MZ cascade forms the drop part of the device and the lower MZ cascade forms the add part.

Figure 10 is a cross-section through the folded end of the device, as indicated by the section line X'-X' in Figure 9 and shows the single ridge waveguide of the U-bend interconnecting the two inner buried channels of the MZ cascades.

The general comments made above in relation to the embodiment of Figure 7 apply to the Figure 9 embodiment, but are not repeated for the sake of brevity.

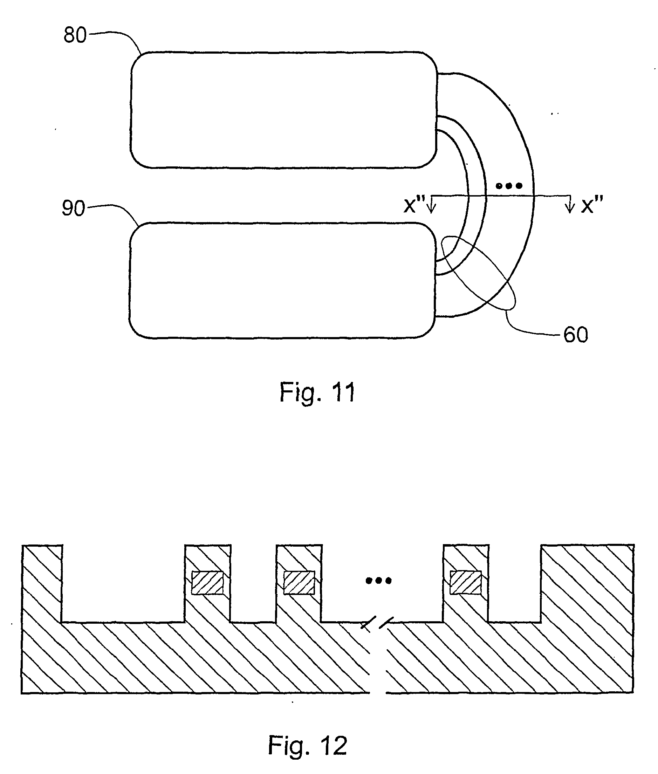

Figure 11 is a schematic drawing representing a generalised structure of first and second integrated optical circuits 80 and 90 realised in buried planar waveguide technology interconnected by a plurality of elevated ridge sections 50 (three in the figure) of the kind previously described. The purpose of this figure is to emphasise that the present invention may be applied to an arbitrary optical circuit and is in no way limited to the MZ device examples described above. Two or more arbitrary optical circuits may be thus joined together on the same chip with low-loss tight bends, thus avoiding the need for optical fibre or free space connections, or excessively long chips. It will also be appreciated that the optical circuits 80 and 90 may be a mixture of buried waveguide sections, non-buried waveguide sections and other optical elements, and need not be purely composed of buried waveguide sections.

Figure 12 is a cross-section through the end of the device, as indicated by the section line X"-X" in Figure 11 and shows the three ridge waveguides of the interconnect between the two arbitrary optical circuits 80 and 90.

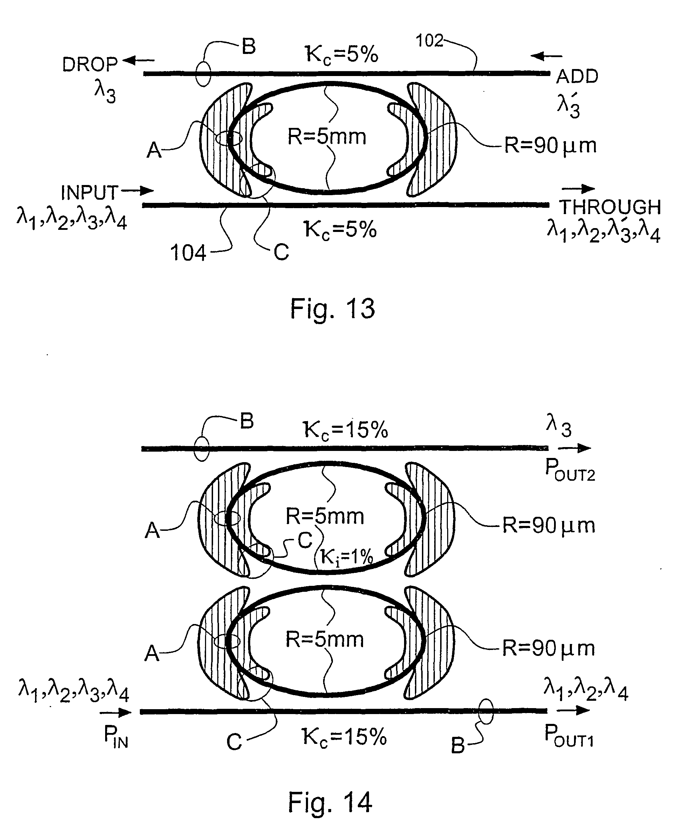

Figures 13 shows an add/drop filter such as is useful for WDM systems according to another embodiment. In this embodiment, the add/drop filter is in the form of a ring resonator. The specific parameter values given in these figures are example values for glass on silicon technology. The figure shows schematically the general form of the ring resonator device in plan view. The general form will be familiar from the prior art [2] [3] [4]. Namely, the device comprises a waveguide ring 100 arranged to lie within first and second input/output waveguide rails 102 and 104, the ring 100 having first and second circumferential portions that are approached tangentially by the first and second waveguide rails respectively to form two couplers both of the same coupling strength κ_{c} which is 5% in the example given.

The arrangement functions as an add/drop filter as indicated in the drawing with the example of a 4-channel WDM input signal INPUT having wavelength channels λ₁, λ₂, λ₃, λ₄ input to the left end (as viewed in the figure) of the lower rail 104 which has one channel λ₃ dropped by the resonator ring to output as an output signal DROP from the left end of the upper rail 102, while the other three channels λ₁, λ₂, λ₄ continue along the lower rail 104 to be output from the right end thereof as an output signal THROUGH. A channel λ₃' may be added by input into the upper rail 102 from the right side of the figure to output with the THROUGH signal.

The device incorporates the teachings of the invention through its hybrid buried/ridge waveguide structure. This is illustrated schematically in the figure through the hatched regions, which indicate an etched surface level of the chip. Away from the couplers, the ring 100 has a tight bend radius, R=90 microns in the specific example, and is made of a ridge structure, similar to that shown in Figure 2, but curved (see labelled section "A" in Figure 13). As the couplers are approached, the ridge structure tapers out from both sides of the ring through widening of the lateral cladding, similar to what is shown in Figure 3 and 4, but curved (see labelled section "C" in Figure 13). In other words, two opposed transition regions of the kind described further above with reference to Figures 3 and 4 are formed. The lateral cladding tapers out so that at or slightly before the coupling point the waveguide is effectively a buried waveguide structure, as illustrated in Figure 1 (see labelled section "B" in Figure 13). The buried coupling sections have a length L_{acc}. As will be understood from the discussion of Figures 1 to 6 above, the coupling sections are buried in the sense that the lateral cladding is made sufficiently wide around the coupling point to ensure that the waveguide modes have substantially fully decayed within the lateral cladding.

In the transition region and subsequent buried-waveguide coupling region, the bend radius of the ring is gradually increased to reach a value of R=5 mm at the coupling point (which is over 50 times greater than the bend radius in the ridge section). Exemplary refractive index values for the core and cladding materials are 1.4967 and 1.4552 respectively, in the case of silica materials. The free spectral range (FSR) of the example ring is 100 GHz. The device can be used as an add/drop filter in a 25 GHz spaced dense WDM (DWDM) system. Alternatively, the device could also be used as an interleave, i.e. a device that separates odd from even channels in a WDM system, in a 50 GHz spaced DWDM system, or to remove noise components accumulated between channels in a 100 GHz spaced WDM system.

The hybrid ridge/buried waveguide design thus allows a ring resonator operable for WDM at 1.3 or 1.55 microns to be made with large-feature-size glass-on-silicon technology. (In the prior art, a device with similar operational specification would required use of small-feature size technology, such as GaAs). The coupling regions are formed by large radius bends in buried waveguides, whereas the ring can be made small enough to provide a free spectral range (FSR) large enough to satisfy the wavelength specifications of WDM by having a small bend radius, which is one to two orders of magnitude smaller than the bend radius at the coupler. This is made possible by the device's post-etched ridge structure in which the waveguiding core extends uninterruptedly and in the same plane through both ridge and buried parts of the ring, The prior art alternative solution [2] to the present approach is to use a strongly confined ridge waveguide throughout the device, in which case the dimensions of the waveguides become smaller and the couplers are more difficult to fabricate. For example, in reference [2], the waveguide has width 0.5 microns and thickness 0.45 microns, By contrast, in a specific example of the present embodiment, the corresponding waveguide dimensions are width 4.5 microns and thickness 5 microns. With this order of magnitude increase in dimensions, propagation losses arising from any roughness in the etched surfaces are not problematic.

Figure 14 shows another ring-based add/drop filter for WDM applications according to a further embodiment. With reference to Figure 13, it will be understood that the device of Figure 14 is a two-ring version of the device of Figure 13. It is noted that the additional coupler between the rings is made without transition regions and burying, since its coupling coefficient can be made very small (1% is the example value indicated in the figure). The other couplers to the input/output waveguide rails are as in the Figure 13 device, with transition regions leading to fully buried coupling sections of length L_{acc}. The example values for the coupling coefficients of these couplers is 15%. The labelling "A", "B" and "C" in Figure 14 corresponds to that of Figure 13. It will be appreciated that more than two rings could also be used in further embodiments with a suitable choice of coupling coefficients etc, for example to provide particular filter shapes. The free spectral range (FSR) of the example rings is 100 GHz. The device can be used as an add/drop filter in a 25 GHz spaced dense WDM (DWDM) system, Alternatively, the device could also be used as an interleave, i.e. a device that separates odd from even channels in a WDM system, in a 50 GHz spaced DWDM system, or to remove noise components accumulated between channels in a 100 GHz spaced WDM system.

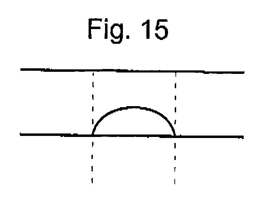

Figure 15 shows a schematic section of a further type of buried waveguide shapes in which the invention may be embodied, in addition to the rectangular buried waveguide shown in Figure 1. Figure 15 shows a shape of a nominally rectangular buried waveguide in which the annealing process has transformed the rectangular with some types of processing. Figure 15B shows a buried waveguide structure usually referred to as a rib waveguide in the art. Figure 15C shows another buried waveguide structure which is usually referred to in the art as an inverse rib waveguide. Both the rib and inverse rib structures are buried below an upper cladding layer. Figure 15D shows a buried waveguide structure with no cladding layer, the core lying directly below the upper surface of the waveguide structure. This structure may be termed as a surface waveguide structure. Alternatively, a thin cladding layer may be included having a thickness less than the waveguide mode penetration depth (not shown). A cladding layer can be omitted, since lateral confinement is sufficient to provide the desired effects, as will be understood from the above. Further waveguide shapes may be envisaged.

Although the invention has been described with reference to two main kinds of device, namely MZ cascades and ring resonators, it will be understood that the basic sub-components explained with reference to Figures 1 to 4 can be used to make any number of optical waveguide devices having a hybrid buried/waveguide structure. Moreover, it will be appreciated that tapered transition sections, although beneficial, could be dispensed with for devices that do not require minimisation of losses. If provided, the geometrical profile of the transition between ridge and buried sections can be chosen quite freely, but whatever profile is used it should be such that the modal field of the first waveguide is adiabatically adapted to that of the second waveguide if losses are to be minimised.

Further, although the above examples give parameter values for silica (or other glass) on silicon technology, the hybrid buried/ridge waveguide concept explained herein can be applied to planar waveguide technology of any materials system. The basic idea of a transition between two waveguides having different lateral confinement of the optical modal field achieved by lateral interface or surface structuring in a common planar structure is applicable to any planar fabrication technique in which surface structuring is possible, whether it be by etching, self-organised growth, micro-machining or whatever (e.g. silicon-on-silicon, lithium niobate, III-V semiconductor etc.). The surface structuring may be by post-processing (e.g. etching, micro-machining) or *in situ* processing during waveguide deposition (e.g. self-organised growth). However it is achieved, the lateral surface or interface structuring serves to vary locally the optical properties of the waveguides in the direction transverse with respect to the propagation direction to allow a mixture of high and low refractive index contrast waveguides sections to be fabricated in a common core as part of a single integrated optical device.

Moreover, as already mentioned above, although the embodiments have been explained mainly in terms of an air-bounded structure, the ridge sections could also be covered with a solid state material of suitably low refractive index. This might have advantages for stabilising or passivating the device, or simply protecting the transition and ridge waveguide sections. If a filling material is used, there is the requirement that it has a suitable refractive index to provide a sufficiently high lateral index contrast in the ridge waveguide sections.

### REFERENCES

[1] R. Adar et al. - Measurement of very low-loss silica on silicon waveguides with a ring resonator - Appl. Phys. Lett. 58(5), 4 February 1991 pages 444-5
[2] D. Rafizadeh et al. - Waveguide-coupled AlGaAs/GaAs microcavity ring and disk resonators with high finesse and 21.6 nm free spectral range - Optics Letters Vol.22 No.16 August 15, 1997 pages 1244-6
[3] B. E. Little et al. - Vertically coupled Glass Microring Resonator Channel Dropping Filters - IEEE Photonics Technology Letters Vol.11 No.2 February 1999 pages 215-7
[4] S. Suzuki et al. - Integrated-Optic Ring Resonators with Two Stacked Layers of Silica Waveguides on Si - IEEE Photonics Technology Letters Vol.4 No.11 November 1992 pages 1256-8
[5] B. J. Offrein et al. - Tunable Optical Add/Drop components in Silicon-Oxinitride Waveguide Structures - Proc. ECOC'98, 20 - 24 September 1998, Madrid, Spain, pages 325-6
[5a] B. J. Offrein et al. - Wavelength tunable optical add-after-drop filter with flat passband for WDM networks - IEEE Photonics Technology Letters, vol. 11, no. 2, pages 239 - 241 (1999)
[6] R. Germann et al. - Silicon-Oxinitride Layers For Optical Waveguide Applications - 195th Meeting of the Electrochemical Society on Silicon Nitride and Silicon Oxide Thin Insulating Films, Seattle, WA, May 2 - 7, 1999
[7] Takashi - Recent Progress on Silica-based Thermooptic Switches for ADMs/XCs - Proc. LEOS 1999 pages 485-6
[8] US 5,659,646 by Vinchant et al - Optical Waveguide Transition and Method for Forming It - Issued August 19, 1997
[9] Spuhler et al. - A Very Short Planar Silica Spot-Size Converter Using a Nonperiodic Segmented Waveguide - IEEE Journal Lightwave Technology Vol.16, No.9, September 1998 pages 1680-5
[10] C. K. Madsen and J. H. Zhao "Optical filter design and analysis: a signal processing approach" John Wiley & Sons, page 241 (1999)

## Claims

1. An optical device comprising a waveguide having a waveguiding core defined by a core layer (2), a lower cladding layer (4) arranged therebelow, and an upper cladding layer (6) arranged thereabove, wherein the core layer has a refractive index greater than the refractive index of the lower and upper cladding layers, the waveguiding core extending in the same plane through one or more buried waveguide sections (I/V) of the waveguide lying below an upper surface (8) of the optical device and one or more curved ridge waveguide sections (III) of the waveguide, the ridge waveguide sections having side surfaces (16) extending below the upper surface on both sides of the core layer, and wherein the ridge waveguide sections of the waveguide comprise lateral cladding (10) between the core layer and the side surfaces of the ridge waveguide sections, thereby to provide greater lateral confinement of waveguide modes in the curved ridge waveguide sections than in the buried waveguide sections.

2. An optical device according to claim 1, wherein the lateral cladding in the ridge waveguide sections has a width of between 0.1 and 1 microns.

3. An optical device according to any one of the preceding claims, comprising a transition section interconnecting each of the buried and ridge waveguide sections, each transition section comprising lateral cladding having a width that increases from the ridge waveguide section to the buried waveguide section to increase the effective refractive index of the fundamental mode of the waveguide from a lower value in the ridge waveguide section to a higher value in the buried waveguide section.

4. An optical device according to claim 3, wherein the cladding width is varied adiabatically in each transition section, thereby to suppress transition losses.

5. An optical device according to any one of the preceding claims, wherein the waveguide is single mode both in the buried waveguide sections and the ridge waveguide sections.

6. A method of fabricating a waveguide structure starting from a buried waveguide structure comprising a buried waveguiding core lying below an upper surface, the waveguiding core being defined by a core layer (2), a lower cladding layer (4) arranged therebelow, and an upper cladding layer (6) arranged thereabove, wherein the core layer has a refractive index greater than the refractive index of the lower and upper cladding layers, the method comprising removal of parts of the buried waveguide structure on both sides of the core layer where the core describes a bend to form one or more curved ridge waveguide sections containing the core, wherein the ridge waveguide sections of the waveguide comprise lateral cladding (10) between the core layer and the side surfaces of the ridge waveguide sections, thereby creating a hybrid structure of curved ridge waveguide sections (III) and buried waveguide sections (I/V) having a continuous common waveguiding core with greater lateral confinement of waveguide modes in the curved ridge waveguide sections than in the buried waveguide sections.

7. An optical device comprising first and second cascades of Mach-Zehnder interferometers implemented in respective first and second buried waveguide structures and an interconnecting ridge waveguide structure sharing a common waveguiding core with the first and second buried waveguide structures and describing at least one ridge waveguide bend, wherein the common waveguiding core is defined by a core layer (2), a lower cladding layer (4) arranged therebelow, and an upper cladding layer (6) arranged thereabove, wherein the core layer has a refractive index greater than the refractive index of the lower and upper cladding layers, the waveguiding core extending in the same plane through the buried and ridge waveguide structures, the ridge waveguide bends having side surfaces (16) extending below the upper surface on both sides of the core layer, and wherein the ridge waveguide sections of the waveguide comprise lateral cladding (10) between the core layer and the side surfaces of the ridge waveguide sections, thereby to provide greater lateral confinement of waveguide modes in the ridge waveguide bends than in the buried waveguide structures.

8. An optical device according to claim 7, wherein the bend is U-shaped to provide a half turn, with the first and second cascades being arranged side by side.

9. An optical device according to claim 7 or 8, wherein the ridge waveguide bend has a radius of between 200 microns and 5 cm, more especially of between 1 mm and 1 cm.

10. An optical device comprising first and second linear waveguides and at least one ring waveguide arranged therebetween so as to form first and second couplers with the first and second linear waveguides at respective first and second tangential coupling regions comprising first and second coupling sections of the at least one ring waveguide and adjacent first and second coupling sections of the first and second linear waveguides, wherein the first and second coupling sections of the ring and linear waveguides are formed as buried waveguide sections, whereas further curved sections of the at least one ring waveguide are formed as ridge waveguide sections, wherein the buried waveguide sections and the ridge waveguide sections share a common waveguiding core defined by a core layer (2), a lower cladding layer (4) arranged therebelow, and an upper cladding layer (6) arranged thereabove, wherein the core layer has a refractive index greater than the refractive index of the lower and upper cladding layers, the waveguiding core extending in the same plane through the buried and ridge waveguide sections, the ridge waveguide sections having side surfaces (16) extending below the upper surface on both sides of the core layer, and wherein the ridge waveguide sections of the waveguide comprise lateral cladding (10) between the core layer and the side surfaces of the ridge waveguide sections, thereby to provide greater lateral confinement of waveguide modes in the curved ridge waveguide sections of the at least one ring than in the buried waveguide sections that form the first and second couplers.

11. An optical device according to claim 10, wherein the further sections formed as ridge waveguide sections have a bend radius at least five times larger than a bend radius of the coupling sections of the at least one ring waveguide formed as buried waveguide sections.

## Patentansprüche

1. Optische Vorrichtung, umfassend einen Hohlleiter, der einen durch eine Kernschicht (2), eine darunter angeordnete untere Umhüllungsschicht (4) und eine darüber angeordnete obere Umhüllungsschicht (6) definierten wellenleitenden Kern aufweist, wobei die Kernschicht einen größeren refraktiven Index als den refraktiven Index der unteren und oberen Umhüllungsschichten aufweist, sich der wellenleitende Kern in derselben Ebene durch eine oder mehrere eingebettete Hohlleitabschnitte (I/V) des unter einer oberen Oberfläche (8) der optischen Vorrichtung liegenden Hohlleiters und ein oder mehrere gekrümmte Steghohlleiterabschnitte (III) des Hohlleiters, wobei die Steghohlleiterabschnitte Seitenoberflächen (16) aufweisen, die sich unter der oberen Oberfläche auf beiden Seiten der Kernschicht erstrecken, erstreckt, und wobei die Steghohlleiterabschnitte des Hohlleiters seitliche Umhüllung (10) zwischen der Kernschicht und den Seitenoberflächen der Steghohlleiterabschnitte umfassen, um **dadurch** größere seitliche Beschränkung der Hohlleitermodi in den gekrümmten Steghohlleiterabschnitten als in den eingebetteten Hohlleiterabschnitten bereitzustellen.

2. Optische Vorrichtung gemäß Anspruch 1, wobei die laterale Umhüllung in den Steghohlleiterabschnitten eine Breite zwischen 0,1 und 1 Mikron aufweist.

3. Optische Vorrichtung gemäß einem der vorstehenden Ansprüche, umfassend einen Übergangsabschnitt, der jeden der eingebetteten und Steghohlleiterabschnitte verbindet, wobei jeder Übergangsabschnitt laterale Umhüllung umfasst, die eine Breite aufweist, die sich von dem Steghohlleiterabschnitt zum eingebetteten Hohlleiterabschnitt vergrößert, um den effektiven refraktiven Index des grundlegenden Modus des Hohlleiters von einem unteren Wert im Steghohlleiterabschnitt zu einem höheren Wert in dem eingebetteten Hohlleiterabschnitt zu steigern.

4. Optische Vorrichtung gemäß Anspruch 3, wobei die Umhüllungsbreite adiabatisch an jedem Übergangsabschnitt variiert, um damit Übergangsverluste zu unterdrücken.

5. Optische Vorrichtung gemäß einem der vorstehenden Ansprüche, wobei der Hohlleiter sowohl in eingebetteten Hohlleiterabschnitten als auch in Steghohlleiterabschnitten Einzelmodus ist.

6. Verfahren zur Herstellung einer Hohlleiterstruktur, ausgehend von einer eingebetteten Hohlleiterstruktur, die einen unter einer oberen Oberfläche liegenden eingebetteten wellenleitenden Kern umfasst, wobei der wellenleitende Kern durch eine Kernschicht (2), eine darunter angeordnete untere Umhüllungsschicht (4) und eine darauf angeordnete obere Umhüllungsschicht (6) definiert ist, wobei die Kernschicht einen größeren refraktiven Index als den refraktiven Index der unteren und oberen Umhüllungsschichten aufweist, das Verfahren das Entfernen von Teilen der eingebetteten Hohlleiterstruktur auf beiden Seiten der Kernschicht umfasst, wo der Kern eine Biegung beschreibt, um ein oder mehrere gekrümmte Steghohlleiterabschnitte, die den Kern enthalten, auszubilden, wobei die Steghohlleiterabschnitte des Hohlleiters laterale Umhüllung (10) zwischen der Kernschicht und den Seitenoberflächen der Steghohlleiterabschnitte umfassen, wodurch eine Hybridstruktur von gekrümmten Steghohlleiterabschnitten (III) und eingebetteten Hohlleiterabschnitten (I/V) erzeugt wird, die einen kontinuierlichen gemeinsamen wellenleitenden Kern mit größerer lateraler Beschränkung von Wellenleitmodi in den gekrümmten Steghohlleiterabschnitten als in den eingebetteten Hohlleiterabschnitten aufweisen.

7. Optische Vorrichtung, umfassend erste und zweite Kaskaden von in entsprechenden ersten und zweiten eingebetteten Hohlleiterstrukturen implementierten Mach-Zehnder Interferometern und eine verbindende Steghohlleiterstruktur, die einen gemeinsamen wellenleitenden Kern mit ersten und zweiten eingebetteten Hohlleiterstrukturen teilt und zumindest eine Steghohlleiterbiegung beschreibt, wobei der gemeinsame wellenleitende Kern durch eine Kernschicht (2), eine darunter angeordnete untere Umhüllungsschicht (4) und eine darüber angeordnete obere Umhüllungsschicht (6) definiert ist, wobei der Kernschicht einen größeren refraktiven Index als den refraktiven Index der unteren und oberen Umhüllungsschichten aufweist, wobei sich der wellenleitende Kern in derselben Ebene durch die eingebetteten und Steghohlleiterstrukturen erstreckt, die Steghohlleiterbiegungen Seitenoberflächen (16) aufweisen, die sich unter der oberen Oberfläche auf beiden Seiten der Kernschicht erstrecken und wobei die Steghohlleiterabschnitte des Hohlleiters laterale Umhüllung (10) zwischen der Kernschicht und den Seitenoberflächen der Steghohlleiterabschnitte umfassen, um **dadurch** eine größere laterale Beschränkung von Hohlleitermodi in den Steghohlleiterbiegungen als in den eingebetteten Hohlleiterstrukturen bereitzustellen.

8. Optische Vorrichtung gemäß Anspruch 7, wobei die Biegung U-förmig ist, um eine halbe Wendung bereitzustellen, wobei die ersten und zweiten Kaskaden Seite an Seite angeordnet sind.

9. Optische Vorrichtung gemäß Anspruch 7 oder 8, wobei die Steghohlleiterbiegung einen Radius zwischen 200 Mikron und 5 cm, genauer zwischen 1 mm und 1 cm aufweist.

10. Optische Vorrichtung, umfassend erste und zweite lineare Hohlleiter und zumindest einen Ringhohlleiter, der dazwischen angeordnet ist, um so erste und zweite Kuppler mit den ersten und zweiten lineare Hohlleitern an entsprechenden ersten und zweiten tangentialen Kopplungsregionen zu bilden, die erste und zweite Kopplungsabschnitte des zumindest einen Ringhohlleiters und angrenzender erster und zweiter Kopplungsabschnitte der ersten und zweiten linearen Hohlleiter umfassen, wobei die ersten und zweiten Kopplungsabschnitte der Ring- und linearen Hohlleiter als eingebettete Hohlleiterabschnitte ausgebildet sind, während weitere gekrümmte Abschnitte des zumindest einen Ringhohlleiters als Steghohlleiterabschnitte ausgebildet sind, wobei die eingebetteten Hohlleiterabschnitte und die Steghohlleiterabschnitte einen gemeinsamen wellenleitenden Kern teilen, der durch eine Kernschicht (2), eine darunter angeordnete untere Umhüllungsschicht (4) und eine darüber angeordnete obere Umhüllungsschicht (6) definiert ist, wobei die Kernschicht einen größeren refraktiven Index als den refraktiven Index der unteren und oberen Umhüllungsschichten aufweist, sich der wellenleitende Kern in derselben Ebene durch die eingebetteten und die Steghohlleiterabschnitte, wobei die Steghohlleiterabschnitte Seitenoberflächen (16) aufweisen, die sich unter der oberen Oberfläche auf beiden Seiten der Kernschicht erstrecken, erstreckt, und wobei die Steghohlleiterabschnitte des Hohlleiters seitliche Umhüllung (10) zwischen der Kernschicht und den Seitenoberflächen der Steghohlleiterabschnitte umfassen, um **dadurch** größere seitliche Beschränkung der Hohlleitermodi in den gekrümmten Steghohlleiterabschnitten des zumindest einen Rings als in den eingebetteten Hohlleiterabschnitten, die die ersten und zweiten Kuppler bilden, bereitzustellen.

11. Optische Vorrichtung gemäß Anspruch 10, wobei die weiteren als Steghohlleiterabschnitte ausgebildeten Abschnitte einen Biegeradius zumindest fünfmal größer als ein Biegeradius der Kopplungsabschnitte des als eingebettete Hohlleiterabschnitte ausgebildeten eines Steghohlleiters aufweisen.

## Revendications

1. Dispositif optique comprenant un guide d'ondes comportant un coeur de guidage d'ondes défini par une couche de coeur (2), une couche de gaine inférieure (4) disposée en dessous de celle-ci, et une couche de gaine supérieure (6) disposée au-dessus de celle-ci, dans lequel la couche de coeur a un indice de réfraction supérieur à l'indice de réfraction des couches de gaine inférieure et supérieure, le coeur de guidage d'ondes s'étendant dans le même plan à travers une ou plusieurs sections de guide d'ondes enfouies (I/V) du guide d'ondes se trouvant en dessous d'une surface supérieure (8) du dispositif optique et une ou plusieurs sections de guide d'ondes à nervures incurvées (III) du guide d'ondes, les sections de guide d'ondes à nervures comportant des surfaces latérales (16) s'étendant en dessous de la surface supérieure des deux côtés de la couche de coeur, et dans lequel les sections de guide d'ondes à nervures du guide d'ondes comprennent une gaine latérale (10) entre la couche de coeur et les surfaces latérales des sections de guide d'ondes à nervures, de façon à produire ainsi un plus grand confinement latéral des modes de guide d'ondes dans les sections de guide d'ondes à nervures incurvées que dans les sections de guide d'ondes enfouies.

2. Dispositif optique selon la revendication 1, dans lequel la gaine latérale dans les sections de guide d'ondes latérales a une largeur comprise entre 0,1 et 1 micromètre.

3. Dispositif optique selon l'une quelconque des revendications précédentes, comprenant une section de transition interconnectant chacune des sections de guide d'ondes enfouie et à nervures, chaque section de transition comprenant une gaine latérale ayant une largeur qui augmente de la section de guide d'ondes à nervures à la section de guide d'ondes enfouie de façon à accroître l'indice de réfraction efficace du mode fondamental du guide d'ondes d'une valeur inférieure dans la section de guide d'ondes à nervures à une valeur supérieure dans la section de guide d'ondes enfouie.

4. Dispositif optique selon la revendication 3, dans lequel la largeur de gaine varie de façon adiabatique dans chaque section de transition, de façon à supprimer ainsi les pertes de transition.

5. Dispositif optique selon l'une quelconque des revendications précédentes, dans lequel le guide d'ondes est monomode aussi bien dans les sections de guide d'ondes enfouies que dans les sections de guide d'ondes à nervures.

6. Procédé pour fabriquer une structure de guide d'ondes à partir d'une structure de guide d'ondes enfouie comprenant un coeur de guidage d'ondes enfoui se trouvant en dessous d'une surface supérieure, le coeur de guidage d'ondes étant défini par une couche de coeur (2), une couche de gaine inférieure (4) disposée en dessous de celle-ci, et une couche de gaine supérieure (6) disposée au-dessus de celle-ci, la couche de coeur ayant un indice de réfraction supérieur à l'indice de réfraction des couches de gaine inférieure et supérieure, le procédé comprenant le retrait de parties de la structure de guide d'ondes enfouie des deux côtés de la couche de coeur là où le coeur décrit une courbure pour former une ou plusieurs sections de guide d'ondes à nervures incurvées contenant le coeur, dans lequel les sections de guide d'ondes à nervures du guide d'ondes comprennent une gaine latérale (10) entre la couche de coeur et les surfaces latérales des sections de guide d'ondes à nervures, de façon à créer ainsi une structure hybride de sections de guide d'ondes à nervures incurvées (III) et de sections de guide d'ondes enfouies (I/V) ayant un coeur de guidage d'ondes commun continu avec un plus grand confinement latéral des modes de guide d'ondes dans les sections de guide d'ondes à nervures incurvées que dans les sections de guide d'ondes enfouies.

7. Dispositif optique comprenant des première et deuxième cascades d'interféromètres de Mach-Zehnder réalisées dans des première et deuxième structures de guide d'ondes enfouies respectives et une structure de guide d'ondes à nervures d'interconnexion partageant un coeur de guidage d'ondes commun avec les première et deuxième structures de guide d'ondes enfouies et décrivant au moins une courbure de guide d'ondes à nervures, le coeur de guidage d'ondes commun étant défini par une couche de coeur (2), une couche de gaine inférieure (4) disposée en dessous de celle-ci, et une couche de gaine supérieure (6) disposée au-dessus de celle-ci, la couche de coeur ayant un indice de réfraction supérieur à l'indice de réfraction des couches de gaine inférieure et supérieure, le coeur de guidage d'ondes s'étendant dans le même plan à travers les structures de guide d'ondes enfouies et à nervures, les courbures de guide d'ondes à nervures comportant des surfaces latérales (16) s'étendant en dessous de la surface supérieure des deux côtés de la couche de coeur, et dans lequel les sections de guide d'ondes à nervures du guide d'ondes comprennent une gaine latérale (10) entre la couche de coeur et les surfaces latérales des sections de guide d'ondes à nervures, de façon à produire ainsi un plus grand confinement latéral des modes de guide d'ondes dans les courbures de guide d'ondes à nervures que dans les structures de guide d'ondes enfouies.

8. Dispositif optique selon la revendication 7, dans lequel la courbure est en forme de U afin de produire un demi-tour, les première et deuxième cascades étant disposées côte à côte.

9. Dispositif optique selon la revendication 7 ou 8, dans lequel la courbure de guide d'ondes à nervures a un rayon compris entre 200 micromètres et 5 cm, et, plus particulièrement, entre 1 mm et 1 cm.

10. Dispositif optique comprenant des premier et deuxième guides d'ondes linéaires et au moins un guide d'ondes annulaire disposé entre ceux-ci de façon à former des premier et deuxième coupleurs avec les premier et deuxième guides d'ondes linéaires en des première et deuxième régions de couplage tangentielles comprenant des première et deuxième sections de couplage du guide d'ondes annulaire au nombre d'au moins un et des première et deuxième sections de couplage adjacentes des premier et deuxième guides d'ondes linéaires, dans lequel les première et deuxième sections de couplage des guides d'ondes annulaires et linéaires sont formées sous la forme de sections de guide d'ondes enfouies, tandis que d'autres sections incurvées du guide d'ondes annulaire au nombre d'au moins un sont formées sous la forme de sections de guide d'ondes à nervures, dans lequel les sections de guide d'ondes enfouies et les sections de guide d'ondes à nervures partagent un coeur de guidage d'ondes commun défini par une couche de coeur (2), une couche de gaine inférieure (4) disposée en dessous de celle-ci, et une couche de gaine supérieure (6) disposée au-dessus de celle-ci, dans lequel la couche de coeur a un indice de réfraction supérieur à l'indice de réfraction des couches de gaine inférieure et supérieure, le coeur de guidage d'ondes s'étendant dans le même plan à travers les sections de guide d'ondes enfouies et à nervures, les sections de guide d'ondes à nervures comportant des surfaces latérales (16) s'étendant en dessous de la surface supérieure des deux côtés de la couche de coeur, et dans lequel les sections de guide d'ondes à nervures du guide d'ondes comprennent une gaine latérale (10) entre la couche de coeur et les surfaces latérales des sections de guide d'ondes à nervures, de façon à produire ainsi un plus grand confinement latéral des modes de guide d'ondes dans les sections de guide d'ondes à nervures incurvées de l'anneau au nombre d'au moins un que dans les sections de guide d'ondes enfouies qui forment les premier et deuxième coupleurs.

11. Dispositif optique selon la revendication 10, dans lequel les autres sections formées sous la forme de sections de guide d'ondes à nervures ont un rayon de courbure au moins cinq fois supérieur à un rayon de courbure des sections de couplage du guide d'ondes annulaire au nombre d'au moins un formées sous la forme de sections de guide d'ondes enfouies.
